# EUROPEAN PATENT SPECIFICATION

(11) **EP 4 447 156 B1**
(45) Date of publication and mention of the grant of the patent: **18.03.2026**
(21) Application number: 23793219.9
(22) Date of filing: 22.08.2023
(51) Int. Cl.: H01M 4/36, H01M 4/62, H01M 4/525, H01M 4/505, H01M 4/485, C01G 53/50

(54) **TERNARY POSITIVE ELECTRODE MATERIAL, PREPARATION METHOD THEREFOR, AND SECONDARY BATTERY**
TERNÄRES POSITIVELEKTRODENMATERIAL, HERSTELLUNGSVERFAHREN DAFÜR UND SEKUNDÄRBATTERIE
MATÉRIAU D'ÉLECTRODE POSITIVE TERNAIRE, SON PROCÉDÉ DE PRÉPARATION ET BATTERIE SECONDAIRE

(30) Priority: 01.03.2023 CN 202310186421
(43) Date of publication of application: 16.10.2024
(73) Proprietor: Tianjin B&M Science And Technology Co., Ltd., Tianjin 300384 (CN)
(72) Inventor: JING, Lele, Tianjin 300384 (CN); ZHOU, Zhiping, Tianjin 300384 (CN); ZHAO, Xiaotong, Tianjin 300384 (CN)
(74) Representative: Meroni, Francesca
(86) International application number: PCT/CN2023/114164
(87) International publication number: WO 2024/178920

(56) References cited:
- CN-A- 107 302 087
- CN-A- 108 847 477
- CN-A- 109 461 894
- CN-A- 109 980 219
- CN-A- 115 411 257
- CN-A- 116 314 673
- JP-A- 2018 041 675
- US-B2- 9 157 164
- KURILENKO K A ET AL: "Modification of Li[Li0.13Ni0.2Mn0.47Co0.2]O2cathode material by layered CeO2-C coating", JOURNAL OF SOLID STATE ELECTROCHEMISTRY, SPRINGER, BERLIN, DE, vol. 23, no. 2, 16 November 2018 (2018-11-16), pages 433 - 439, XP036685421, ISSN: 1432-8488, [retrieved on 20181116], DOI: 10.1007/S10008-018-4150-5

## Description

### Technical Field

The present disclosure relates to the technical field of batteries, and in particular to a ternary cathode material, a preparation method thereof, and a secondary battery.

### Background Art

With the continuous upgrading of demand for vehicle power batteries, the secondary batteries have become one of the most widely used clean energy sources. As an important part of the secondary battery, the cathode active material provides active ions that move back and forth between positive and negative electrodes for the battery charging and discharging process. Therefore, the cathode active material is an important factor affecting the performance of the secondary battery.

Among many cathode active materials, the cathode material of lithium-nickel-cobalt-manganese oxide has the advantages such as high discharge specific capacity, and thus has attracted widespread attention. According to research findings, the specific capacity of the cathode material is increased with an increase of nickel content therein, but thermal decomposition temperature of the material is also decreased. In this way, Ni⁴⁺ inside the material is more prone to being reduced to Ni³⁺. In order to ensure charge balance, the system will release oxygen, and cause the gas generation problem. Release of oxygen also will lead to loss of lattice oxygen in the material structure, which affects structural stability and cycle performance of the material.

Therefore, how to provide a ternary cathode material with high specific capacity and good cycle performance has become an urgent problem to be solved. CN 109 980 219 A discloses nickel-cobalt-manganese cathode material with a cerium oxide coating. CN 115 411 257 A discloses a lithium-rich manganese-based positive electrode material coated with double layers on the surface, with cerium aluminium oxide as the inner coating material and copper sulfate as the outer coating material. KURILENKO K A et al. (JOURNAL OF SOLID STATE ELECTROCHEMISTRY, vol. 23, no. 2, 16 November 2018, pages 433-439) discloses a similar content to CN 109 980 219 A . US 9 157 164 B2 discloses a coating layer for electrode conducting material, the coating being cerium oxide based and further comprising lanthanum or hafnium.

### Summary

Based on this, the present disclosure provides a ternary cathode material and a preparation method thereof. The above ternary cathode material has relatively high specific capacity and cycle performance. In addition, the present disclosure further provides a secondary battery containing the above ternary cathode material. The above secondary battery has both relatively high energy density and high cycle performance.

A first aspect of the present disclosure provides a ternary cahtode material, including a bulk, a first coating layer provided on a surface of the bulk, and a second coating layer provided on a surface of the first coating layer, wherein
the bulk includes a lithium-nickel-cobalt-manganese oxide, and the bulk is doped with an M1 element, wherein the M1 element includes Mo, Hf, and La;
the first coating layer includes CeO₂ and a La-containing compound, and the CeO₂ and the La-containing compound are each independently distributed in a granular form on the surface of the bulk; and
the second coating layer includes an oxide containing an M2 element, and the M2 element is at least one selected from B and Al.

The ternary cathode material provided in the present disclosure has relatively high specific capacity and cycle performance. The bulk of the ternary cathode material is uniformly doped with the M1 element, and the first coating layer and the second coating layer are included in sequence on the surface of the bulk. The first coating layer is a composite coating layer including CeO₂ and the La-containing compound, and the second coating layer contains the M2 element. The M1 element and the M2 element are each selected from specific element species. This can improve the structural stability and thermal stability of the ternary cathode material while allowing the ternary cathode material to have relatively high specific capacity, which in turn improves the cycle performance thereof. Moreover, the presence of the coating layers also can reduce side reactions between the ternary cathode material and electrolyte, inhibit generation of gas of the system and irreversible phase change of the material during the cycle, and further improve the cycle performance of the material. Besides, since the coating layers hardly react with residual lithium on the surface of the bulk, pH value of the ternary cathode material can be lowered, and generation of inert substances such as residual alkali can be reduced, thus improving the cycle life and safety performance of the material.

In some of the embodiments, the ternary cathode material satisfies at least one of the following characteristics (1)~(6):
(1) a molar amount of the Mo element is 0.001%~0.1% of a sum of molar amounts of nickel, cobalt, and manganese elements in the lithium-nickel-cobalt-manganese oxide;
(2) a molar amount of the Hf element is 0.001%~0.1% of a sum of molar amounts of nickel, cobalt, and manganese elements in the lithium-nickel-cobalt-manganese oxide;
(3) a molar amount of the La element is 0.001%~0.1% of a sum of molar amounts of nickel, cobalt, and manganese elements in the lithium-nickel-cobalt-manganese oxide;
(4) the M1 element further includes at least one of W, Nb, Zr, and Al;
(5) the La-containing compound is La₄NiLiO₈; and
(6) the compound containing the M2 element is at least one of B₂O₃ and Al₂O₃.

In some of the embodiments, a content ratio of CeO₂ to the La-containing compound is 1:1~3:1, wherein contents of CeO₂ and the La-containing compound are both mass percentage contents in the ternary cathode material.

In some of the embodiments, a thickness T1 of the first coating layer and an average particle diameter D of the ternary cathode material satisfy: 0.0015≤T1/D≤0.006;
and/or, a thickness T2 of the second coating layer and the average particle diameter D of the ternary cathode material satisfy: 0.001≤T2/D≤0.0035.

Optionally, the average particle diameter D of the ternary cathode material satisfies: 1.9 µm≤D≤2.3 µm.

Optionally, the thickness T1 of the first coating layer satisfies: 4 nm≤T1≤10 nm.

Optionally, the thickness T2 of the second coating layer satisfies: 3 nm≤T2≤6 nm.

A second aspect of the present disclosure provides a preparation method of a ternary cathode material, including the following steps:
mixing a nickel-cobalt-manganese hydroxide, a first lithium source, and an M1 element compound, and performing a first calcination treatment, to prepare a bulk doped with the M1 element;
mixing the bulk doped with the M1 element, a second lithium source, CeO₂, and a lanthanum-containing source, and performing a second calcination treatment, to prepare an intermediate including a first coating layer; and
mixing the intermediate including the first coating layer with an M2 element compound, and performing a third calcination treatment, to prepare the ternary cathode material.

In some of the embodiments, the preparation method of a ternary cathode material satisfies at least one of the following characteristics (1)~(5):
(1) the first lithium source includes at least one of lithium hydroxide and lithium carbonate;
(2) the M1 element compound includes an Mo element compound, an Hf element compound, and a La element compound, wherein the Mo element compound is at least one selected from molybdenum trioxide and ammonium molybdate, the Hf element compound is hafnium oxide, and the La element compound is at least one selected from lanthanum trioxide and lanthanum nitrate;
(3) the second lithium source is lithium hydroxide;
(4) the lanthanum source includes at least one of lanthanum trioxide and lanthanum nitrate; and
(5) the M2 element compound includes at least one of a B element compound and an Al element compound, wherein the B element compound includes at least one of boric acid and boron oxide, and the Al element compound includes at least one of aluminum hydroxide and aluminum oxide.

In some of the embodiments, the preparation method of a ternary cathode material satisfies at least one of the following characteristics (1)~(4):
(1) a molar amount of lithium element in the first lithium source is 102%~104% of a sum of molar amounts of nickel, cobalt, and manganese elements in the nickel-cobalt-manganese hydroxide;
(2) a molar amount of Mo element in the Mo element compound is 0.001%~0.1% of a sum of molar amounts of nickel, cobalt, and manganese elements in the nickel-cobalt-manganese hydroxide;
(3) a molar amount of Hf element in the Hf element compound is 0.001%~0.1% of a sum of molar amounts of nickel, cobalt, and manganese elements in the nickel-cobalt-manganese hydroxide; and
(4) a molar amount of La element in the La element compound is 0.001%~0.1% of a sum of molar amounts of nickel, cobalt, and manganese elements in the nickel-cobalt-manganese hydroxide.

In some of the embodiments, a mass of the lanthanum source is 0.02%~0.08% of the mass of the nickel-cobalt-manganese hydroxide, a mass of CeO₂ is 0.04%~0.16% of the mass of the nickel-cobalt-manganese hydroxide, and a mass of the second lithium source is 0.02%~0.08% of the mass of the nickel-cobalt-manganese hydroxide.

In some of the embodiments, a mass of the M2 element compound is 0.08%~0.32% of a mass of the intermediate including the first coating layer.

A third aspect of the present disclosure provides a secondary battery, including a positive electrode, wherein the positive electrode includes the ternary cathode material of the first aspect or the ternary cathode material prepared by the preparation method of the second aspect.

### Brief Description of Drawing

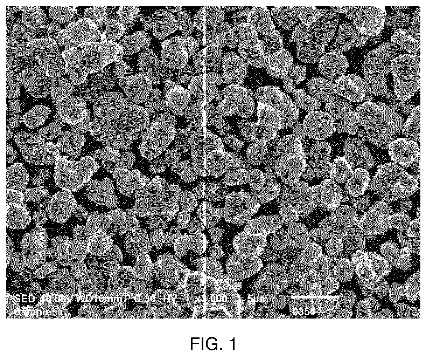

FIG. 1 is a scanning electron microscopy graph of a ternary cathode material in an example of the present disclosure.

### Detailed Description of Embodiments

In order to make the above objectives, features, and advantages of the present disclosure more apparent and understandable, specific embodiments of the present disclosure are described in detail below in combination the drawings. In the following description, many specific details are set forth in order to provide a thorough understanding of the present disclosure. However, the present disclosure can be implemented in other modes different from those described herein. Those skilled in the art could make similar improvements without departing from the connotation of the present disclosure. Therefore, the present disclosure is not limited to the specific examples disclosed below.

Unless otherwise defined, all of the technical and scientific terms used herein have the same meanings as those generally understood by those skilled in the art of the present disclosure. Terms used herein in the description of the present disclosure are only for the purpose of describing specific examples, rather than limiting the present disclosure. The wordings "and/or" used herein include any and all combinations of one or more associated items listed. As used herein, "multiple (a plurality of)" includes two and more items. As used herein, "above a certain number" should be understood as a certain number and a range greater than a certain number.

Lithium-nickel-cobalt-manganese oxide has relatively high specific capacity, and a secondary battery using lithium-nickel-cobalt-manganese oxide as a cathode material generally can obtain a relatively high energy density. Nickel element in the lithium-nickel-cobalt-manganese oxide mainly plays a role of increasing the capacity, therefore, the higher a relative content of the nickel element is, the higher a theoretical capacity of the material is. However, an increase in nickel element content will also lead to decrease in thermal decomposition temperature of the material, and Ni⁴⁺ inside the material is more prone to being reduced to Ni³⁺. In order to ensure charge balance, the system will release oxygen, and cause a gas generation problem. In addition, release of lattice oxygen will reduce structural stability of the material, and further affect the cycle performance of the material. In addition, side reactions exist between the cathode material and an electrolytic solution in the secondary battery, which will cause oxygen loss on a surface of the cathode material of the lithium-nickel-cobalt-manganese oxide, further deteriorating the structural stability of the material.

In the conventional technology, other elements are doped in the lithium-nickel-cobalt-manganese oxide, so as to improve stability of internal structure of the material. By coating the lithium-nickel-cobalt-manganese oxide, occurrence of side reactions is reduced, and further the stability of the material surface is improved. However, most of the conventional coating layers use an inert material, which is not conducive to deintercalation and intercalation of active ions, and affects the energy density of the battery. In addition, temperature changes during battery charging and discharging, and the conventional doping elements have poor thermal stability, thus, during the use of the battery, the doping elements often fail.

In order to overcome the above problems, an embodiment of the present disclosure provides a ternary cathode material, including a bulk, a first coating layer provided on a surface of the bulk, and a second coating layer provided on a surface of the first coating layer. The bulk includes lithium-nickel-cobalt-manganese oxide, and the bulk is doped with an M1 element, wherein the M1 element includes Mo, Hf, and La. The first coating layer includes CeO₂ and a La-containing compound, and the CeO₂ and the La-containing compound are each independently distributed in a granular form on the surface of the bulk. The second coating layer includes an oxide containing an M2 element, and the M2 element is at least one selected from B and Al.

The bulk of the ternary cathode material includes the lithium-nickel-cobalt-manganese oxide. Due to the characteristic that the lithium-nickel-cobalt-manganese oxide has relatively high specific capacity, the secondary battery using this ternary cathode material has a relatively high energy density. A molar content of nickel in the lithium-nickel-cobalt-manganese oxide is 60%~80%, such as 60%, 65%, 70%, 75% or 80%, of a total molar content of transition metal elements. The higher the nickel content of the lithium-nickel-cobalt-manganese oxide is, the higher the specific capacity of the ternary cathode material is, which is beneficial to improving the energy density of the battery.

The lithium-nickel-cobalt-manganese oxide is of a layered structure, and has lithium sites, transition metal sites, and oxygen sites, wherein nickel, cobalt, and manganese elements are located on the transition metal sites. The transition metal sites and the oxygen sites form a transition metal layer. The lithium sites are located between transition metal layers, and therefore, active lithium ions located at the lithium sites can be deintercalated and intercalated freely. Doping the M1 element in the bulk can improve the thermal stability of the material, and can allow the material to have a three-dimensional lithium ion diffusion channel, thus improving migration and diffusion capability of lithium ions, and further increasing the specific capacity of the material. The M1 element includes Mo, Hf, and La. The Mo element itself has relatively high stability, and can increase a temperature of transition of the ternary cathode material from spinel phase to halite phase, so that the material is less prone to phase change. Meanwhile, this element can enhance binding strength between transition metal atoms and oxygen atoms in the ternary cathode material, and improve the stability of the transition metal layer in the layered structure. The Hf element can reduce a mixing degree of lithium ions and nickel ions in the ternary cathode material, and can alleviate the irreversible phase change of the material during cycle. In addition, during the battery charging and discharging, the Hf element can migrate to a surface of a positive electrode sheet and form a solid solution, which can prevent structural collapse caused by rapid change of crystal structure of the material during the charging and discharging. Moreover, the above solid solution also can reduce dissolution of transition metal ions in the material. It can be understood that the positive electrode sheet of the battery generally includes a positive current collector and a cathode active material provided on the positive current collector, and the ternary cathode material of the present disclosure can be used as the cathode active material. The La element can reduce the mixing degree of lithium ions and nickel ions, and improve the structural stability of the material; and the La element can improve the ionic conductivity of the bulk. In addition, since the first coating layer includes the La-containing compound, i.e., the bulk and the first coating layer of the ternary cathode material have the same element, compatibility and stability at a bonding interface between the first coating layer and the bulk are enhanced.

The first coating layer is provided on the surface of the bulk. The first coating layer can be located on the entire surface of the bulk, and also may be located on a part of the surface of the bulk, which is not limited in the present disclosure. The first coating layer is a composite coating layer including CeO₂ and the La-containing compound, and CeO₂ and the La-containing compound are each independently distributed in a granular form on the surface of the bulk. A granular coating structure can effectively reduce fall-off of a coating material during the battery charging and discharging. CeO₂ can bind oxygen atoms on the surface of the bulk, and reduce loss of lattice oxygen, thus improving the structural stability of the material, and alleviating the irreversible phase change of the material. Moreover, since CeO₂ has abundant oxygen vacancy, activation energy of charge transfer can be reduced, and the binding of ions at interface sites can be promoted. Ce⁴⁺ also can broaden a transmission channel of lithium ions, and reduce corrosion of the electrolytic solution to the bulk material. The La-containing compound has relatively high lithium ion conductivity, can improve conduction of lithium ions, and improve the specific capacity and charging and discharging performance of the material. Moreover, the La-containing compound can capture the active oxygen substances generated by irreversible reactions of the bulk surface, inhibit the release of oxygen, and reduce the loss of lattice oxygen in the cathode material, thereby improving the cycle stability of the material. In addition, since the La-containing compound hardly reacts with the residual lithium on the bulk surface, the content of residual alkali in the material can be reduced. It should be noted that the lattice oxygen refers to oxygen element located at the oxygen sites in the layered structure of the lithium-nickel-cobalt-manganese oxide; and the oxygen vacancy refers to vacancy formed by oxygen deletion caused by oxygen ion detachment in lattices in an oxygen-containing compound (such as lithium-nickel-cobalt-manganese oxide and CeO₂).

Under the synergistic effect of CeO₂ and the La-containing compound, not only the specific capacity of the material can be improved by increasing migration speeds of the lithium ions and charges, but also the structural stability and cycle life of the material can be improved by reducing the loss of oxygen vacancy in the layered structure of the material.

The second coating layer is provided on the surface of the first coating layer. The second coating layer can be located on the entire surface of the first coating layer, and also may be located on a part of the surface of the first coating layer, which is not limited in the present disclosure. The second coating layer can isolate contact between the bulk and the first coating layer and the electrolytic solution, inhibit dissolution of transition metals in the material, and improve a contact interface between the ternary cathode material and the electrolytic solution, thereby improving the cycle life of the material. In addition, the second coating layer containing the M2 element hardly reacts with residual lithium in the material, which inhibits generation of residual alkali such as lithium hydroxide, thereby reducing pH value of the ternary cathode material, and improving the safety and cycle performance of the material. Exemplarily, the M2 element includes B.

The ternary cathode material provided in the present disclosure has relatively high specific capacity and cycle performance. The bulk of the ternary cathode material is uniformly doped with the M1 element, and the first coating layer and the second coating layer are included in sequence on the surface of the bulk. The first coating layer is a composite coating layer including CeO₂ and the La-containing compound, and the second coating layer contains the M2 element. The M1 element and the M2 element are each selected from specific element species. This can improve the structural stability and thermal stability of the ternary cathode material while allowing the ternary cathode material to have relatively high specific capacity, which in turn improves the cycle performance thereof. Moreover, the presence of the coating layers also can reduce side reactions between the ternary cathode material and the electrolyte, and inhibit generation of gas of the system and irreversible phase change of the material during the cycle, thus further improving the cycle performance of the material. Besides, since the coating layers hardly react with residual lithium on the surface of the bulk, the pH value of the ternary cathode material can be lowered, and generation of inert substances such as residual alkali can be reduced, thus improving the cycle life and safety performance of the material. Under the multiple synergistic effects of M1 doping and the first coating layer and the second coating layer, the ternary cathode material in the present example can maintain a stable layered structure in an actual use process, and thus has better cycle performance. Moreover, the surface of the ternary cathode material is hardly corroded by the electrolytic solution, thus further improving the stability of the material.

In a specific example, the lithium-nickel-cobalt-manganese oxide has a chemical formula of Li₁₊ₐNiₓCo_{y}Mn_{z}O₂, where 0.02≤a≤0.04, 0.6≤x≤0.8, 0.05≤y≤0.07, 0.13≤z≤0.35, and x+y+z=1. Relatively high specific capacity can be rendered using such lithium-nickel-cobalt-manganese oxide.

In a specific example, a molar amount of the Mo element is 0.001%~0.1% of a sum of molar amounts of nickel, cobalt, and manganese elements in the lithium-nickel-cobalt-manganese oxide, and specifically may be 0.001%, 0.005%, 0.01%, 0.02%, 0.03%, 0.04%, 0.05%, 0.06%, 0.07%, 0.08%, 0.09% or 0.1%. With the content of the Mo element in the bulk being within the above range, the structural stability and thermal stability of the material can be better improved, thus further improving the cycle performance of the material.

In a specific example, a molar amount of the Hf element is 0.001%~0.1% of a sum of molar amounts of nickel, cobalt, and manganese elements in the lithium-nickel-cobalt-manganese oxide, and specifically may be 0.001%, 0.005%, 0.01%, 0.02%, 0.03%, 0.04%, 0.05%, 0.06%, 0.07%, 0.08%, 0.09% or 0.1%. With the content of the Hf element in the bulk being within the above range, the problem of mixing of lithium ions and nickel ions can be better alleviated, thus further improving the structural stability and cycle performance of the material.

In a specific example, a molar amount of the La element is 0.001%~0.1% of a sum of molar amounts of nickel, cobalt, and manganese elements in the lithium-nickel-cobalt-manganese oxide, and specifically may be 0.001%, 0.005%, 0.01%, 0.02%, 0.03%, 0.04%, 0.05%, 0.06%, 0.07%, 0.08%, 0.09% or 0.1%. It should be noted that, the above molar amount of the La element refers to the molar amount of the La element doped in the bulk. With the content of the La element in the bulk being within the above range, the problem of mixing of lithium ions and nickel ions can be better alleviated, and the ionic conductivity of the material can be optimized, thus further improving the structural stability, cycle performance and specific capacity of the material.

In a specific example, the M1 element further includes at least one of W, Nb, Zr, and Al. By doping the above elements in the lithium-nickel-cobalt-manganese oxide, the specific capacity and cycle performance of the material can be further improved.

In a specific example, the La-containing compound is La₄NiLiO₈. La₄NiLiO₈ has good lithium ion and oxygen ion conduction properties, which not only can improve the lithium ion conductivity of the ternary cathode material, but also can transmit and store precipitated crystal lattice oxygen, thereby alleviating the gas generating problem of the material. In addition, La₄NiLiO₈ hardly reacts with residual lithium on the surface of the bulk, which reduces the generation of inert materials such as residual alkali, further improving the specific capacity, safety performance, and cycle performance of the material.

In a particular example, a content ratio of CeO₂ to the La-containing compound is 1:1~3:1. Specifically: the content ratio of CeO₂ to the La-containing compound may be 1:1, 1.2:1, 1.4:1, 1.6:1, 1.8:1, 2:1, 2.2:1, 2.4:1, 2.6:1, 2.8:1 or 3:1. When the content ratio of CeO₂ to the La-containing compound is within the above range, the ternary cathode material can more sufficiently exert the effect of the first coating layer under the synergistic effects of CeO₂ and the La-containing compound, thus further improving the cycle performance of the material.

In a specific example, the content of CeO₂ is 0.04%~0.16%, wherein the content of CeO₂ is a mass percentage content in the ternary cathode material, and specifically may be 0.04%, 0.05%, 0.06%, 0.07%, 0.08%, 0.09%, 0.10%, 0.11%, 0.12%, 0.13%, 0.14%, 0.15%, or 0.16%.

In a specific example, a content of the La-containing compound is 0.03%~0.1%, wherein the content of the La-containing compound is a mass percentage content in the ternary cathode material, which specifically may be 0.03%, 0.04%, 0.05%, 0.06%, 0.07%, 0.08%, 0.09% or 0.1%.

In a specific example, the oxide containing the M2 element is at least one of B₂O₃ and Al₂O₃. The above oxides can reduce surface activity of the ternary cathode material, and reduce side reactions between them and the electrolytic solution, thus further improving the structural stability of the ternary cathode material.

In a specific example, a thickness T1 of the first coating layer and an average particle diameter D of the ternary cathode material satisfy: 0.0015≤T1/D≤0.006, and T1/D specifically may be 0.0015, 0.002, 0.0025, 0.003, 0.0035, 0.004, 0.0045, 0.005, or 0.006. When T1 and D satisfy the above relationship, the effect of the first coating layer can be better exerted, so that the lithium ions have relatively good migration and diffusion capability in the ternary cathode material, and the generation of oxygen in the material is reduced.

In a specific example, a thickness T2 of the second coating layer and the average particle diameter D of the ternary cathode material satisfy: 0.001≤T2/D≤0.0035, and T2/D specifically may be 0.001, 0.0015, 0.002, 0.0025, 0.003 or 0.0035. When T2 and D satisfy the above relationship, the structure of the ternary cathode material can be better stabilized, and the surface activity of the ternary cathode material can be reduced.

In a specific example, the average particle diameter D of the ternary cathode material satisfies: 1.9 µm≤D≤2.3 µm.

In a specific example, the thickness T1 of the first coating layer satisfies: 4 nm≤T1≤10 nm.

In a specific example, the thickness T2 of the second coating layer satisfies: 3 nm≤T2≤6 nm.

Further, the present disclosure further provides a preparation method of the above ternary cathode material, including the following steps:
S100: mixing a nickel-cobalt-manganese hydroxide, a first lithium source, and an M1 element compound, and performing a first calcination treatment, to prepare a bulk doped with the M1 element;
S200: mixing the bulk doped with the M1 element, a second lithium source, CeO₂, and a lanthanum source, and performing a second calcination treatment, to prepare an intermediate including a first coating layer; and
S300: mixing the intermediate including the first coating layer with an M2 element compound, and performing a third calcination treatment, to prepare the ternary cathode material.

In the above preparation method, by means of dry doping and two-step dry coating, use of solvent is decreased and energy consumption is reduced. In the first calcination treatment, the nickel-cobalt-manganese hydroxide and the first lithium source form a lithium-nickel-cobalt-manganese oxide bulk, and the M1 element can be uniformly doped into the above bulk. The two-step dry coating forms the first coating layer and the second coating layer on the surface of the bulk respectively, and coating substances in the coating layers are attached to the corresponding bulk or the first coating layer in a granular form. This not only can improve bonding strength of the coating layers, but also can reduce overall fall-off of the coating layers during the cycle.

In a specific example, the nickel-cobalt-manganese hydroxide has a chemical formula of NiₓCo_{y}Mn_{z}(OH)₂, where 0.6≤x≤0.8, 0.05≤y≤0.07, 0.13≤z≤0.35, and x+y+z=1.

In a specific example, the first lithium source includes at least one of lithium hydroxide and lithium carbonate.

In a specific example, the M1 element compound includes an Mo element compound, an Hf element compound, and a La element compound, wherein the Mo element compound is at least one selected from molybdenum trioxide and ammonium molybdate, the Hf element compound is hafnium oxide, and the La element compound is at least one selected from lanthanum trioxide and lanthanum nitrate.

In a specific example, a molar amount of lithium element in the first lithium source is 102%~104% of a sum of molar amounts of nickel, cobalt, and manganese elements in the nickel-cobalt-manganese hydroxide, and specifically may be 102%, 102.5%, 103%, 103.5% or 104%.

In a specific example, a molar amount of Mo element in the Mo element compound is 0.001%~0.1% of a sum of molar amounts of nickel, cobalt, and manganese elements in the nickel-cobalt-manganese hydroxide, and specifically may be 0.001%, 0.005%, 0.01%, 0.02%, 0.03%, 0.04%, 0.05%, 0.06%, 0.07%, 0.08%, 0.09% or 0.1%.

In a specific example, a molar amount of Hf element in the Hf element compound is 0.001%~0.1% of a sum of molar amounts of nickel, cobalt, and manganese elements in the nickel-cobalt-manganese hydroxide, and specifically may be 0.001%, 0.005%, 0.01%, 0.02%, 0.03%, 0.04%, 0.05%, 0.06%, 0.07%, 0.08%, 0.09% or 0.1%.

In a specific example, a molar amount of La element in the La element compound is 0.001%~0.1% of a sum of molar amounts of nickel, cobalt, and manganese elements in the nickel-cobalt-manganese hydroxide, and specifically may be 0.001%, 0.005%, 0.01%, 0.02%, 0.03%, 0.04%, 0.05%, 0.06%, 0.07%, 0.08%, 0.09% or 0.1%.

In a specific example, the nickel-cobalt-manganese hydroxide, the first lithium source, and the M1 elemental compound are mixed through a first stirring treatment. Optionally, the first stirring treatment is performed at a speed of 900 r/min-1200 r/min, for 2 times~4 times, 20 min~40 min each time. Through the first stirring treatment, the nickel-cobalt-manganese hydroxide, the first lithium source, and the M1 element compound can be better mixed, so that the M1 element can be more uniformly doped into the lithium-nickel-cobalt-manganese oxide. In addition, fractional stirring allows the raw materials to be uniformly mixed more easily, and a temperature of the system can be controlled, to prevent increased viscosity of the mixed materials due to an excessively high temperature.

In a specific example, the first calcination treatment is performed at a temperature of 800 °C~1000 °C for 8 h~24 h, in an oxygen-containing atmosphere. In particular, the temperature may be 800 °C, 900 °C or 1000 °C, and the time may be 8 h, 10 h, 12 h, 14 h, 16 h, 20 h, 22 h or 24 h. When the temperature is lower than 800 °C, lithium-nickel-cobalt-manganese oxide particles are not easy to grow, and as the temperature is too low, reaction cannot proceed completely, resulting in relatively low crystallinity of the bulk prepared. When the temperature is higher than 1000 °C, the lithium-nickel-cobalt-manganese oxide particles have a too large particle diameter, a reduced specific surface area, and a reduced active lithium content. With the temperature of the first calcination treatment being within the above range, the prepared bulk can be ensured with a relatively good layered structure and a suitable particle diameter.

In a specific example, after the first calcination treatment, calcined product is cooled to 200 °C~300 °C at a rate of 1 °C/min~2 °C/min, and subsequently naturally cooled. Stepwise cooling can relieve the problem of excessive internal stress of the bulk caused by too fast temperature change, and improve the structural stability of the particles of the bulk.

In a specific example, the lanthanum source includes at least one of lanthanum trioxide and lanthanum nitrate.

In a specific example, the second lithium source is lithium hydroxide.

In a specific example, a mass of CeO₂ is 0.04%~0.16% of a mass of the nickel-cobalt-manganese hydroxide, and specifically may be 0.04%, 0.05%, 0.06%, 0.07%, 0.08%, 0.09%, 0.10%, 0.11%, 0.12%, 0.13%, 0.14%, 0.15%, or 0.16%. It should be noted that, under the conditions of the second calcination treatment, CeO₂ is hardly decomposed, and also hardly chemically reacts with other components in the system. Therefore, CeO₂ in the raw material can be retained in the intermediate of the first coating layer. In addition, the CeO₂ raw material can be provided in the form of powder. In the second calcination treatment, the CeO₂ powder may aggregate to form CeO₂ particles, which are attached to the surface of the bulk. The CeO₂ raw material also can be provided directly in the form of particles, and the CeO₂ particles are attached to the surface of the bulk in the second calcination treatment.

In a specific example, a mass of the lanthanum source is 0.02%~0.08% of the mass of the nickel-cobalt-manganese hydroxide, and specifically may be 0.02%, 0.03%, 0.04%, 0.05%, 0.06%, 0.07% or 0.08%.

In a specific example, a mass of the second lithium source is 0.02%~0.08% of the mass of the nickel-cobalt-manganese hydroxide, and specifically may be 0.02%, 0.03%, 0.04%, 0.05%, 0.06%, 0.07% or 0.08%.

By adjusting and controlling the masses of the lanthanum-containing source and the second lithium source, the two sufficiently react with each other, and a certain amount of La-containing compound is formed in the first coating layer, thereby sufficiently exerting the effect of the La-containing compound.

In a specific example, the mass of the lanthanum source is equal to the mass of the second lithium source.

In a specific example, the bulk doped with the M1 element, the second lithium source, CeO₂, and the lanthanum source are mixed through a second stirring treatment. Optionally, the second stirring treatment is performed at a speed of 1300 r/min-1500 r/min, for 2 times~4 times, 20 min~30 min each time. Through the second stirring treatment, the bulk doped with the M1 element, the second lithium source, CeO₂, and the lanthanum source can be better mixed, so that CeO₂ and the La-containing compound can be more uniformly attached to the surface of the bulk. In addition, fractional stirring allows the raw materials to be uniformly mixed more easily, and a temperature of the system can be controlled, to prevent increased viscosity of the mixed materials due to an excessively high temperature.

In a specific example, the second calcination treatment is performed at a temperature of 500 °C~750 °C for 8 h~16 h, in an oxygen-containing atmosphere. Specifically, the temperature may be 500 °C, 550 °C, 600 °C, 650 °C, 700 °C or 750 °C, and the time may be 8 h, 10 h, 12 h, 14 h or 16 h.

In a specific example, after the second calcination treatment, calcined product is cooled to 200 °C~300 °C at a rate of 1 °C/min~2 °C/min, and subsequently naturally cooled. Stepwise cooling can relieve the problem of excessive internal stress of the bulk and the first coating layer caused by too fast temperature change, and improve the structural stability of the bulk and the first coating layer.

In a specific example, the M2 element compound includes at least one of a B element compound and an Al element-containing compound.

In a specific example, the B element compound includes at least one of boric acid and boron oxide.

In a specific example, the Al element compound includes at least one of aluminum hydroxide and aluminum oxide.

In a specific example, a mass of the M2 element compound is 0.08%~0.32% of a mass of the intermediate including the first coating layer, and specifically may be 0.08%, 0.12%, 0.16%, 0.20%, 0.24%, 0.28% or 0.32%. By adjusting and controlling the mass of the M2 element compound, a suitable second coating layer can be formed on the surface of the first coating layer, and the effect of the second coating layer is better exerted.

In a specific example, the intermediate including the first coating layer is mixed with the M2 element compound through a third stirring treatment. Optionally, the third stirring treatment is performed at a speed of 1300 r/min-1500 r/min, for 2 times~4 times, 20 min~30 min each time. Through the third stirring treatment, the intermediate including the first coating layer can be better mixed with the M2 element compound, so that the M2 element compound can be more uniformly attached to the surface of the first coating layer. In addition, fractional stirring allows the raw materials to be uniformly mixed more easily, and a temperature of the system can be controlled, to prevent increased viscosity of the mixed materials due to an excessively high temperature.

In a specific example, the third calcination treatment is performed at a temperature of 350 °C~500 °C for 6 h~12 h, in an oxygen-containing atmosphere. Specifically, the temperature may be 350 °C, 370 °C, 390 °C, 400 °C, 410 °C, 430 °C, 450 °C or 500 °C, and the time may be 6 h, 8 h, 10 h or 12 h.

In a specific example, the preparation method of the ternary cathode material further includes the following steps: before preparing the first coating layer, performing a first crushing treatment on the bulk doped with the M1 element. Optionally, the first crushing treatment includes a roll crushing treatment and ultracentrifugation grinding. Through the first crushing treatment, the bulk doped with the M1 element is allowed to have a suitable particle diameter, which facilitates the formation of the first coating layer. The specific particle diameter of the bulk doped with the M1 element and parameters of the first crushing treatment can be selected by those skilled in the art according to practical needs.

In a specific example, prior to the preparation of the second coating layer, a second crushing treatment is performed on the intermediate including the first coating layer. Optionally, the second crushing treatment includes ultracentrifugation grinding. Through the second crushing treatment, the intermediate including the first coating layer is allowed to have a suitable particle diameter, which facilitates the formation of the second coating layer. The specific particle diameter of the intermediate of the first coating layer and parameters of the second crushing treatment can be selected by those skilled in the art according to practical needs.

Still further, the present disclosure further provides a secondary battery, including the above ternary cathode material or a positive electrode of the ternary cathode material prepared by the above preparation method. Specifically, the positive electrode includes a current collector and a cathode active material provided on the current collector, wherein the cathode active material includes the ternary cathode material of the present disclosure or the ternary cathode material prepared by the preparation method of the present disclosure.

For easy understanding and implementation of the present disclosure, easier-to-implement, more specific and detailed examples and comparative examples are further provided below as a reference. Various examples of the present disclosure and advantages thereof will also be apparent from the following description of specific examples and comparative examples and performance results.

Raw materials used in various following test examples are conventionally available from the market, unless otherwise indicated.

### Example 1

### 1. Preparation of ternary cathode material

(1) 200 g of nickel-cobalt-manganese hydroxide Ni_{0.7}Co_{0.05}Mn_{0.25}(OH)₂ was weighed. Ni_{0.7}Co_{0.05}Mn_{0.25}(OH)₂, LiOH, MoO₃, HfO₂, and La(NO₃)₃·6H₂O were added to a high-speed stirrer and mixed, to obtain a first mixture. Stirring was performed at a speed of 1200 r/min, for three times, 20 min each time. In the above, a molar ratio Li+/Me of Li⁺ in the added LiOH to Ni_{0.7}Co_{0.05}Mn_{0.25}(OH)₂ was 1.04; a molar ratio Mo⁶⁺/Me of Mo⁶⁺ in the added MoOs to Ni_{0.7}Co_{0.05}Mn_{0.25}(OH)₂ was 0.1%; a molar ratio Hf⁴⁺/Me of Hf⁴⁺ in the added HfO₂ to Ni_{0.7}Co_{0.05}Mn_{0.25}(OH)₂ was 0.005%; a molar ratio La³⁺/Me of La³⁺ in the added La(NO₃)₃·6H₂O to Ni_{0.7}Co_{0.05}Mn_{0.25}(OH)₂ was 0.001%; and Me represents a total molar amount of Ni, Co, and Mn in the nickel-cobalt-manganese hydroxide. According to the above ratio relationships and a mass of Ni_{0.7}Co_{0.05}Mn_{0.25}(OH)₂, addition amounts of LiOH, MoOs, HfO₂, and La(NO₃)₃·6H₂O can be obtained by conversion. The first mixture was placed in a muffle furnace to undergo a first calcination treatment, wherein a calcination temperature was 900 °C, calcination atmosphere was an oxygen-containing atmosphere with concentration of O₂ being 99%, and holding time was 20 h. After the calcination, the Muffle furnace was cooled to 200 °C at a rate of 1~2 °C/min, and then as the furnace was cooled to room temperature, a bulk doped with elements was obtained.
(2) Three times of roll crushing was performed on the above bulk doped with elements, and then the bulk was placed in an ultracentrifugation mill and crushed, wherein a rotation speed of the ultracentrifugation mill was 18000 r/min. When a volume average particle diameter Dᵥ₅₀ of the bulk doped with elements reached 3.8 µm, the crushing was stopped.
(3) The crushed bulk doped with elements, CeO₂, La(NO₃)₃·6H₂O, and LiOH were added to a low-speed stirrer and mixed, to obtain a second mixture. Stirring was performed at a speed of 1500 r/min, for two times. In the above, the added CeO₂ was 0.1% of the mass of the nickel-cobalt-manganese hydroxide, the added La(NO₃)₃·6H₂O was 0.05% of the mass of the nickel-cobalt-manganese hydroxide, and the added LiOH and La(NO₃)₃·6H₂O were equal in mass. The second mixture was placed in the muffle furnace to undergo a second calcination treatment, wherein a calcination temperature was 750 °C, calcination atmosphere was an oxygen-containing atmosphere with concentration of O₂ being 99%, and holding time was 8 h. After the calcination, the Muffle furnace was cooled to 200 °C at a rate of 1~2 °C/min, and then as the furnace was cooled to room temperature, an intermediate including the first coating layer was obtained.
(4) The above intermediate including the first coating layer was placed in the ultracentrifugation mill and crushed, wherein a rotation speed of the ultracentrifugation mill was 18000 r/min. When a volume average particle diameter Dᵥ₅₀ of the intermediate including the first coating layer reached 3.8 µm, the crushing was stopped.
(5) The crushed intermediate including the first coating layer and H₃BO₃ were mixed in a low-speed stirrer, to obtain a third mixture. Stirring was performed at a speed of 1500 r/min, for two times. In the above, the added H₃BO₃ was 0.2% of the intermediate including the first coating layer after the crushing. The third mixture was placed into the muffle furnace to undergo a third calcination treatment, wherein a calcination temperature was 450 °C, calcination atmosphere was an oxygen-containing atmosphere with concentration of O₂ being 99%, and holding time was 6 h. Then the furnace was cooled to room temperature. A ternary cathode material product can be obtained by pulverizing, screening, and packaging.

### 2. Preparation of button battery

The ternary cathode material prepared above, acetylene black (conductive agent), and polyvinylidene fluoride (binder) were added in a molar mass ratio of 95:3:2 to a solvent N-methylpyrrolidone, and mixed uniformly, to obtain a positive electrode slurry. Subsequently, the above slurry was applied on an aluminum foil, and dried in a vacuum drying oven at 80 °C for 20 h, to obtain a positive electrode sheet.

Next, the positive electrode sheet was cut into a positive electrode disc with a diameter of 12 mm. The above positive electrode disc, a separator, and a negative electrode lithium sheet were assembled into a button battery in a glove box, and 1 mol/L of electrolytic solution (with a composition of an EC and DEC mixed solution in a mass ratio of 1:1) was injected. After standing for 12 h, an LR 2032 button battery was assembled.

### Example 2

Different from Example 1, a ratio Mo⁶⁺/Me of the molar amount of Mo⁶⁺ in MoOs added in (1) to the sum of molar amounts of Ni, Co, and Mn in the nickel-cobalt-manganese hydroxide was 0.07%.

### Example 3

Different from Example 1, a ratio Mo⁶⁺/Me of the molar amount of Mo⁶⁺ in MoOs added in (1) to the sum of molar amounts of Ni, Co, and Mn in the nickel-cobalt-manganese hydroxide was 0.01%.

### Example 4

Different from Example 1, a ratio Mo⁶⁺/Me of the molar amount of Mo⁶⁺ in MoOs added in (1) to the sum of molar amounts of Ni, Co, and Mn in the nickel-cobalt-manganese hydroxide was 0.05%.

### Example 5

Different from Example 1, the mass of LiOH added in (3) was 70% of the mass of La(NO₃)₃·6H₂O.

### Example 6

Different from Example 1, the mass of LiOH added in (3) was 50% of the mass of La(NO₃)₃·6H₂O.

### Example 7

Different from Example 1, the mass of LiOH added in (3) was 25% of the mass of La(NO₃)₃·6H₂O.

### Example 8

Different from Example 1, the mass of LiOH added in (3) was 10% of the mass of La(NO₃)₃·6H₂O.

### Example 9

Different from Example 1, the calcination temperature in (5) was 500 °C.

### Example 10

Different from Example 1, the calcination temperature in (5) was 400 °C.

### Example 11

Different from Example 1, CeO₂ added in (3) was 0.1% of the mass of the nickel-cobalt-manganese hydroxide, and La(NO₃)₃·6H₂O added was 0.1% of the mass of the nickel-cobalt-manganese hydroxide.

### Example 12

Different from Example 1, CeO₂ added in (3) was 0.15% of the mass of the nickel-cobalt-manganese hydroxide, and La(NO₃)₃·6H₂O added was 0.05% of the mass of the nickel-cobalt-manganese hydroxide.

### Example 13

Different from Example 1, CeO₂ added in (3) was 0.05% of the mass of the nickel-cobalt-manganese hydroxide, and La(NO₃)₃·6H₂O added was 0.1% of the mass of the nickel-cobalt-manganese hydroxide.

### Example 14

Different from Example 1, CeO₂ added in (3) was 0.2% of the mass of the nickel-cobalt-manganese hydroxide, and La(NO₃)₃·6H₂O added was 0.05% of the mass of the nickel-cobalt-manganese hydroxide.

### Comparative Example 1

Different from Example 1, no MoO₃ was added in (1).

### Comparative Example 2

Different from Example 1, no La(NO₃)₃·6H₂O was added in (1).

### Comparative Example 3

Different from Example 1, no HfO₂ was added in (1).

### Comparative Example 4

Different from Example 1, only Ni_{0.7}Co_{0.05}Mn_{0.25}(OH)₂ and LiOH were added in (1).

### Comparative Example 5

Different from Example 1, no La(NO₃)₃·6H₂O was added in (3).

### Test Part

### 1. Material characterization test

Since boiling points of Mo, Hf, and La are higher than the temperature of the first calcination treatment, all of the above three elements were retained in the bulk doped with elements after the first calcination treatment. It can be considered that Mo, Hf, and La doped in the bulk were equal to corresponding elements in the raw materials MoOs, HfO₂, and La (NO₃)₃·6H₂O in molar content. Ce and La in each of the examples and comparative examples were tested with instrument of model ICAP6300. A content of CeO₂ can be converted from the measured Ce content. The measured La content minus the content of La in the bulk is the La content of the first coating layer. The content of La₄NiLiO₈ can be converted from the La content of the first coating layer. The average particle diameter D in each of the examples and comparative examples was measured by scanning electron microscope in combination with Nano Measurer. The thickness T1 of the first coating layer and the thickness T2 of the second coating layer were estimated by transmission electron microscope, and values of T1/D and T2/D were calculated. Results of the above tests are shown in Table 1, wherein the contents of Mo, Hf, and La are ratios of the molar amounts of the above elements to the sum of the molar amounts of nickel, cobalt, and manganese of the bulk, the contents of CeO₂ and the La-containing compound are the mass percentage contents thereof in the ternary cathode material, and the content ratio of the first coating layer refers to the content ratio of CeO₂ to La₄NiLiO₈. Morphology of the ternary cathode material was observed by a scanning electron microscope. FIG. 1 is an SEM graph of the ternary cathode material in Example 1.

### 2. Electrochemical performance test

An electrochemical performance test was performed on the button battery using LAND test system. Discharge specific capacity and first-time direct current resistance (first-time DCR) were tested under conditions of 25 °C and 3.0 V~4.45 V, the battery was charged to a cut-off voltage at 0.1 C constant current, and subsequently discharged to the cut-off voltage at 0.1 C constant current, then the discharge capacity at this time was the discharge specific capacity.

First-time direct current resistance (first-time DCR)=(end voltage V1 after 1 min discharging - standing voltage V2 before discharging)/discharge current I. Cycle test conditions were charging and discharging at 0.1C/0.1C at 50 °C and 3.0 V~4.45 V, for 50 cycles in total. The discharge capacity after the cycle, i.e., the discharge specific capacity after the cycle, was tested. 50-cycle capacity retention=(discharge specific capacity - discharge specific capacity after cycle)/discharge specific capacity, and DCR after cycle=(end voltage V1 after 1 min discharging after cycle - standing voltage V2 before discharging)/discharge current I, 50-cycle DCR rising ratio=(DCR after cycle-first-time DCR)/first-time DCR.

The rate capability of the battery was tested under the condition that after the battery was charged and discharged at 25 °C and 0.1C/0.1C for one cycle, the charging and discharging test was carried out at a rate of 0.2C/1C, discharged capacity was recorded. Taking discharged capacity of 198C as a reference, discharge capacity ratios at different rates were calculated, and recorded as the rate capability. Test results are shown in Table 2.

**Table 1**

| | Bulk | | | | First Coating Layer | | | | Second Coating Layer | |
|---|---|---|---|---|---|---|---|---|---|---|
| | Type of Lithium-nickel-cobalt-manganese Oxide | Mo Content (%) | Hf Content (%) | La Content (%) | CeO₂ Content (%) | La₄NiLiO₈ Content (%) | Content Ratio | T1/D | Type | T2/D |
| Example 1 | Ni_{0.7}Co_{0.05}Mn_{0.25}O₂ | 0.1 | 0.005 | 0.001 | 0.1 | 0.05 | 2:1 | 0.0023 | B₂O₃ | 0.0026 |
| Example 2 | Ni_{0.7}Co_{0.05}Mn_{0.25}O₂ | 0.07 | 0.005 | 0.001 | 0.1 | 0.05 | 2:1 | 0.002 | B₂O₃ | 0.0026 |
| Example 3 | Ni_{0.7}Co_{0.05}Mn_{0.25}O₂ | 0.01 | 0.005 | 0.001 | 0.1 | 0.05 | 2:1 | 0.001 | B₂O₃ | 0.0025 |
| Example 4 | Ni_{0.7}Co_{0.05}Mn_{0.25}O₂ | 0.05 | 0.005 | 0.001 | 0.1 | 0.05 | 2:1 | 0.0015 | B₂O₃ | 0.0024 |
| Example 5 | Ni_{0.7}Co_{0.05}Mn_{0.25}O₂ | 0.1 | 0.005 | 0.001 | 0.1 | 0.05 | 2:1 | 0.0023 | B₂O₃ | 0.0025 |
| Example 6 | Ni_{0.7}Co_{0.05}Mn_{0.25}O₂ | 0.1 | 0.005 | 0.001 | 0.1 | 0.05 | 2:1 | 0.0023 | B₂O₃ | 0.0023 |
| Example 7 | Ni_{0.7}Co_{0.05}Mn_{0.25}O₂ | 0.1 | 0.005 | 0.001 | 0.1 | 0.05 | 2:1 | 0.0023 | B₂O₃ | 0.0025 |
| Example 8 | Ni_{0.7}Co_{0.05}Mn_{0.25}O₂ | 0.1 | 0.005 | 0.001 | 0.1 | 0.05 | 2:1 | 0.0023 | B₂O₃ | 0.0024 |
| Example 9 | Ni_{0.7}Co_{0.05}Mn_{0.25}O₂ | 0.1 | 0.005 | 0.001 | 0.1 | 0.05 | 2:1 | 0.002 | B₂O₃ | 0.002 |
| Example 10 | Ni_{0.7}Co_{0.05}Mn_{0.25}O₂ | 0.1 | 0.005 | 0.001 | 0.1 | 0.05 | 2:1 | 0.0025 | B₂O₃ | 0.0027 |
| Example 11 | Ni_{0.7}Co_{0.05}Mn_{0.25}O₂ | 0.1 | 0.005 | 0.001 | 0.1 | 0.1 | 1:1 | 0.029 | B₂O₃ | 0.003 |
| Example 12 | Ni_{0.7}Co_{0.05}Mn_{0.25}O₂ | 0.1 | 0.005 | 0.001 | 0.15 | 0.05 | 3:1 | 0.031 | B₂O₃ | 0.003 |
| Example 13 | Ni_{0.7}Co_{0.05}Mn_{0.25}O₂ | 0.1 | 0.005 | 0.001 | 0.05 | 0.1 | 0.5:1 | 0.025 | B₂O₃ | 0.003 |
| Example 14 | Ni_{0.7}Co_{0.05}Mn_{0.25}O₂ | 0.1 | 0.005 | 0.001 | 0.2 | 0.05 | 4:1 | 0.034 | B₂O₃ | 0.003 |
| Comparative Example 1 | Ni_{0.7}Co_{0.05}Mn_{0.25}O₂ | \ | 0.005 | 0.001 | 0.1 | 0.05 | 2:1 | 0.001 | B₂O₃ | 0.0024 |
| Comparative Example 2 | Ni_{0.7}Co_{0.05}Mn_{0.25}O₂ | 0.1 | 0.005 | \ | 0.1 | 0.05 | 2:1 | 0.0023 | B₂O₃ | 0.0025 |
| Comparative Example 3 | Ni_{0.7}Co_{0.05}Mn_{0.25}O₂ | 0.1 | \ | 0.001 | 0.1 | 0.05 | 2:1 | 0.002 | B₂O₃ | 0.0024 |
| Comparative Example 4 | Ni_{0.7}Co_{0.05}Mn_{0.25}O₂ | \ | \ | \ | 0.1 | 0.05 | 2:1 | 0.0008 | B₂O₃ | 0.0024 |
| Comparative Example 5 | Ni_{0.7}Co_{0.05}Mn_{0.25}O₂ | 0.1 | 0.005 | 0.001 | 0.1 | \ | \ | 0.0021 | B₂O₃ | 0.0023 |

**Table 2**

| Table 2 | Discharge Specific Capacity/ (mAh/g) | First-time DCR (Ω) | 50-cycle Capacity Retention (%) | 50-cycle DCR Rise (%) | Rate Capability (%) |
|---|---|---|---|---|---|
| Example 1 | 205.3 | 40.6 | 91.5 | 117 | 90.3 |
| Example 2 | 205.9 | 33.2 | 89.3 | 110 | 88.9 |
| Example 3 | 201.3 | 45.2 | 80.1 | 129 | 82.3 |
| Example 4 | 202.5 | 43.1 | 85.1 | 124 | 84.5 |
| Example 5 | 206.4 | 31.5 | 90.3 | 105 | 90.2 |
| Example 6 | 205.9 | 33.2 | 89.3 | 110 | 88.9 |
| Example 7 | 205.3 | 33 | 89 | 110 | 88.5 |
| Example 8 | 204.7 | 34 | 88.2 | 120 | 88 |
| Example 9 | 205 | 41.5 | 91.2 | 119 | 90 |
| Example 10 | 206 | 40.3 | 91.0 | 125 | 89.5 |
| Example 11 | 204.8 | 42.6 | 91 | 120 | 90 |
| Example 12 | 204.4 | 43.6 | 90.3 | 127 | 89.6 |
| Example 13 | 204.9 | 46.6 | 89.3 | 129 | 87.6 |
| Example 14 | 203.9 | 40.6 | 87.3 | 140 | 87.1 |
| Comparative Example 1 | 199.5 | 43.3 | 83.8 | 153 | 78.0 |
| Comparative Example 2 | 202.6 | 49.3 | 78.2 | 135 | 88.5 |
| Comparative Example 3 | 204 | 60 | 85 | 155 | 85 |
| Comparative Example 4 | 190 | 78 | 70 | 190 | 86 |
| Comparative Example 5 | 203.7 | 55.7 | 88.8 | 167 | 89.1 |

It can be seen from FIG. 1 that the ternary cathode material prepared in Example 1 has a relatively rough surface, indicating that the surface of the material has a coating layer. According to the test results in Table 2, it can be seen that the ternary cathode materials in Examples 1~14 have relatively high discharge specific capacity, relatively low first-time DCR, and relatively excellent rate capability. After 50 charging-discharging cycles, the ternary cathode materials in Examples 1~14 have a relatively high capacity retention rate, and the DCR rise is relatively slight, indicating that under the synergistic effects of specific doping elements and multiple coatings, the ternary cathode material in the present disclosure can reduce the internal resistance of the material, and improve the transmission efficiency of lithium ions, thereby ensuring the discharge specific capacity of the material. Moreover, due to the presence of the coating layers, the contact between the ternary cathode material and the electrolytic solution is effectively blocked, the structural stability of the material during cycle is improved, and the material is allowed to have relatively good cycle performance.

It can be seen from the test results of Examples 1~4 that as the Mo doping amount decreases, the electrochemical performance of the material decreases, indicating that the addition of Mo can improve the structural stability and thermal stability of the bulk. The bulk in Comparative Example 1 was not doped with Mo, the discharge specific capacity thereof was only 199.5 mAh/g, the internal resistance was significantly increased after cycle, and the capacity retention rate and the rate capability were also poor. It further indicates that Mo has the effect of stabilizing the lithium ion diffusion channel and improving the cycle stability of the material. The bulk in Comparative Example 2 was not doped with La, and the ionic conductivity of the ternary cathode material was lowered, so that the cycle performance of the material was obviously reduced, indicating that doping of La can reduce the mixing degree of lithium ions and nickel ions, suppress phase change in the cycle process, and improve the cycle performance of the material. The bulk in Comparative Example 3 was not doped with Hf, and the cycle performance of the ternary cathode material was lowered. The bulk in Comparative Example 4 was not doped with any element, and both capacity and cycle performance thereof were relatively poor.

It can be seen from the test results of Examples 5~8 that, when preparing the first coating layer, as the added LiOH decreases, the electrochemical performance of the material decreases, indicating that La₄NiLiO₈ can stabilize the layered structure of the bulk material, and reduce the generation of inert substances such as residual alkali, thereby improving the cycle performance of the ternary cathode material. The first coating layer in Comparative Example 5 did not contain the La compound, the DCR rise thereof was obvious, and both the capacity retention rate and the cycle performance were lowered. It should be noted that the above La-containing compound is La₄NiLiO₈. It can be seen from the test results of Example 9 and Example 10 that the temperature of the third calcination treatment will affect the magnitude of T2/D, and further affect the performance of the battery. From the test results of Examples 11~14, it can be seen that when the content ratio of CeO₂ to La₄NiLiO₈ is in the range of 1:1~3:1, the ternary cathode material has relatively high discharge specific capacity and relatively good cycle performance.

Various technical features in the above examples can be combined arbitrarily. In order to make the description concise, not all possible combinations of various technical features in the above examples are described, while the combinations of these technical features should be considered as within the scope of the present disclosure as long as there is no contradiction.

The above-mentioned examples are merely several embodiments of the present disclosure, of which the description is relatively specific and detailed, but it should not be thus construed as limitation to the patent scope of the present disclosure. It should be indicated that those ordinarily skilled in the art still could make several modifications and improvements without departing from the concept of the present disclosure. They all fall within the scope of protection of the present disclosure. Therefore, the scope of protection of the present patent should be determined by the enclosed claims. The description and the accompanying drawings can be used to explain the contents of the claims.

## Claims

1. A ternary cathode material, comprising a bulk, a first coating layer provided on a surface of the bulk, and a second coating layer provided on a surface of the first coating layer, wherein
the bulk comprises a lithium-nickel-cobalt-manganese oxide, and the bulk is doped with an M1 element, wherein the M1 element comprises Mo, Hf, and La;
the first coating layer comprises CeO₂ and a La-containing compound, and the CeO₂ and the La-containing compound are each independently distributed in a granular form on the surface of the bulk; and
the second coating layer comprises an oxide containing an M2 element, and the M2 element is at least one selected from B and Al.

2. The ternary cathode material according to claim 1, wherein the lithium-nickel-cobalt-manganese oxide has a chemical formula of Li₁₊ₐNiₓCo_{y}Mn_{z}O₂, where 0.02≤a≤0.04, 0.6≤x≤0.8, 0.05≤y≤0.07, 0.13≤z≤0.35, and x+y+z=1.

3. The ternary cathode material according to claim 1 or 2, satisfying at least one of following characteristics (1)~(6):
(1) a molar amount of the Mo element is 0.001%~0.1% of a sum of molar amounts of nickel, cobalt, and manganese elements in the lithium-nickel-cobalt-manganese oxide;
(2) a molar amount of the Hf element is 0.001%~0.1% of a sum of molar amounts of nickel, cobalt, and manganese elements in the lithium-nickel-cobalt-manganese oxide;
(3) a molar amount of the La element is 0.001%~0.1% of a sum of molar amounts of nickel, cobalt, and manganese elements in the lithium-nickel-cobalt-manganese oxide;
(4) the M1 element further comprises at least one of W, Nb, Zr, and Al;
(5) the La-containing compound is La₄NiLiO₈; and
(6) the oxide containing the M2 element is at least one of B₂O₃ and Al₂O₃.

4. The ternary cathode material according to any one of claims 1 to 3, wherein a content ratio of the CeO₂ to the La-containing compound is 1:1~3:1, wherein
contents of the CeO₂ and the La-containing compound are both mass percentage contents in the ternary cathode material.

5. The ternary cathode material according to any one of claims 1 to 4, wherein a mass percentage content of CeO₂ in the ternary cathode material is 0.04%~0.16%; and a mass percentage content of the La-containing compound in the ternary cathode material is 0.03%~0.1%.

6. The ternary cathode material according to any one of claims 1 to 5, wherein a thickness T1 of the first coating layer and an average particle diameter D of the ternary cathode material satisfy: 0.0015≤T1/D≤0.006;
and/or, a thickness T2 of the second coating layer and the average particle diameter D of the ternary cathode material satisfy: 0.001≤T2/D≤0.0035;
optionally, the average particle diameter D of the ternary cathode material satisfies: 1.9 µm≤D≤2.3 µm;
optionally, the thickness T1 of the first coating layer satisfies: 4 nm≤T1≤10 nm; and
optionally, the thickness T2 of the second coating layer satisfies: 3 nm≤T2≤6 nm.

7. A preparation method of the ternary cathode material according to any one of claims 1 to 6, comprising following steps:
mixing a nickel-cobalt-manganese hydroxide, a first lithium source, and an M1 element compound, and performing a first calcination treatment, to prepare a bulk doped with an M1 element;
mixing the bulk doped with the M1 element, a second lithium source, CeO₂, and a lanthanum source, and performing a second calcination treatment, to prepare an intermediate comprising a first coating layer; and
mixing the intermediate comprising the first coating layer with an M2 element compound, and performing a third calcination treatment, to prepare the ternary cathode material.

8. The preparation method of the ternary cathode material according to claim 7, wherein the nickel-cobalt-manganese hydroxide has a chemical formula of NiₓCo_{y}Mn_{z}(OH)₂, where 0.6≤x≤0.8, 0.05≤y≤0.07, 0.13≤z≤0.35, and x+y+z=1.

9. The preparation method of the ternary cathode material according to claim 7 or 8, satisfying at least one of following characteristics (1)~(5):
(1) the first lithium source comprises at least one of lithium hydroxide and lithium carbonate;
(2) the M1 element compound comprises an Mo element compound, an Hf element compound, and a La element compound, wherein the Mo element compound is at least one selected from molybdenum trioxide and ammonium molybdate, the Hf element compound is hafnium oxide, and the La element compound is at least one selected from lanthanum trioxide and lanthanum nitrate;
(3) the second lithium source is lithium hydroxide;
(4) the lanthanum source comprises at least one of lanthanum trioxide and lanthanum nitrate; and
(5) the M2 element compound comprises at least one of a B element compound and an Al element compound, wherein the B element compound comprises at least one of boric acid and boron oxide, and the Al element compound comprises at least one of aluminum hydroxide and aluminum oxide.

10. The preparation method of the ternary cathode material according to claim 9, satisfying at least one of following characteristics (1)~(4):
(1) a molar amount of lithium element in the first lithium source is 102%~104% of a sum of molar amounts of nickel, cobalt, and manganese elements in the nickel-cobalt-manganese hydroxide;
(2) a molar amount of Mo element in the Mo element compound is 0.001%~0.1% of a sum of molar amounts of nickel, cobalt, and manganese elements in the nickel-cobalt-manganese hydroxide;
(3) a molar amount of Hf element in the Hf element compound is 0.001%~0.1% of a sum of molar amounts of nickel, cobalt, and manganese elements in the nickel-cobalt-manganese hydroxide; and
(4) a molar amount of La element in the La element compound is 0.001%~0.1% of a sum of molar amounts of nickel, cobalt, and manganese elements in the nickel-cobalt-manganese hydroxide.

11. The preparation method of the ternary cathode material according to claim 9 or 10, wherein a mass of the lanthanum source is 0.02%~0.08% of a mass of the nickel-cobalt-manganese hydroxide, a mass of the CeO₂ is 0.04%~0.16% of the mass of the nickel-cobalt-manganese hydroxide, and a mass of the second lithium source is 0.02%~0.08% of the mass of the nickel-cobalt-manganese hydroxide.

12. The preparation method of the ternary cathode material according to any one of claims 9 to 11, wherein a mass of the M2 element compound is 0.08%~0.32% of a mass of the intermediate comprising the first coating layer.

13. The preparation method of the ternary cathode material according to any one of claims 7 to 12, wherein the first calcination treatment is performed at a temperature of 800 °C~1000 °C for 8 h~24 h, in an oxygen-containing atmosphere.

14. The preparation method of the ternary cathode material according to any one of claims 7 to 13, wherein after the first calcination treatment, calcined product is cooled to 200 °C~300 °C at a rate of 1 °C/min~2 °C/min, and subsequently naturally cooled.

15. A secondary battery, comprising a positive electrode, wherein the positive electrode comprises the ternary cathode material according to any one of claims 1 to 6 or the ternary cathode material prepared by the preparation method according to any one of claims 7 to 14.

## Patentansprüche

1. Ternäres Kathodenmaterial, umfassend eine Masse, eine erste Beschichtungsschicht, die auf einer Oberfläche der Masse vorgesehen ist, und eine zweite Beschichtungsschicht, die auf einer Oberfläche der ersten Beschichtungsschicht vorgesehen ist, wobei
Die Masse ein Lithium-Nickel-Kobalt-Mangan-Oxid umfasst und die Masse mit einem M1-Element gedopt wird, wobei das M1-Element Mo, Hf und La umfasst;
die erste Beschichtungsschicht CeO₂ und eine La-haltige Verbindung umfasst und das CeO₂ und die La-haltige Verbindung jeweils unabhängig in granulierter Form auf der Oberfläche der Masse verteilt werden; und
die zweite Beschichtungsschicht ein Oxid enthaltend ein M2-Element, und das M2-Element mindestens eines ist, das aus B und Al ausgewählt wird.

2. Ternäres Kathodenmaterial nach Anspruch 1, wobei das Lithium-Nickel-Kobalt-Mangan-Oxid die chemische Formel Li₁₊ₐNiₓCO_{y}Mn_{z}O₂ aufweist, wobei 0,02≤a≤0,04, 0,6≤x≤0,8, 0,05≤y≤0,07, 0,13≤z≤0,35 und x+y+z=1.

3. Ternäres Kathodenmaterial nach Anspruch 1 oder 2, das mindestens eines der folgenden Merkmale (1)~(6) erfüllt:
(1) eine molare Menge des Mo-Elements beträgt 0,001%~0,1% der Summe der molaren Mengen der Elemente Nickel, Kobalt und Mangan in dem Lithium-Nickel-Kobalt-Mangan-Oxid;
(2) eine molare Menge des Hf-Elements beträgt 0,001%~0,1% der Summe der molaren Mengen der Elemente Nickel, Kobalt und Mangan in dem Lithium-Nickel-Kobalt-Mangan-Oxid;
(3) eine molare Menge des La-Elements beträgt 0,001%~0,1% der Summe der molaren Mengen der Elemente Nickel, Kobalt und Mangan in dem Lithium-Nickel-Kobalt-Mangan-Oxid;
(4) das M1-Element ferner mindestens eines aus W, Nb, Zr und Al umfasst;
(5) die La-haltige Verbindung La₄NiliO₈ ist; und
(6) das Oxid enthaltend das M2-Element mindestens eines aus B₂O₃ und Al₂O₃ ist.

4. Ternäres Kathodenmaterial nach einem der Ansprüche 1 bis 3, wobei ein Gehaltsverhältnis von CeO₂ zu der La-haltigen Verbindung 1:1~3:1 beträgt, wobei
die Gehalte von CeO₂ und der La-haltigen Verbindung beide Massenprozentgehalte in dem ternären Kathodenmaterial sind.

5. Ternäres Kathodenmaterial nach einem der Ansprüche 1 bis 4, wobei ein Massenprozentgehalt von CeO₂ in dem ternären Kathodenmaterial 0,04%~0,16% beträgt und ein Massenprozentgehalt der La-haltigen Verbindung in dem ternären Kathodenmaterial 0,03%~0,1% beträgt.

6. Ternäres Kathodenmaterial nach einem der Ansprüche 1 bis 5, wobei eine Dicke T1 der ersten Beschichtungsschicht und ein Mittelpartikeldurchmesser D des ternären Kathodenmaterials 0,0015≤T1/D≤0,006 erfüllt;
und/oder eine Dicke T2 der zweiten Beschichtungsschicht und der Mittelpartikeldurchmesser D des ternären Kathodenmaterials 0,001≤T2/D≤0,0035 erfüllt;
optional der Mittelpartikeldurchmesser D des ternären Kathodenmaterials 1.9 µm ≤D≤2.3 µm erfüllt;
optional die Dicke T1 der ersten Beschichtungsschicht 4 nm≤T1≤10 nm erfüllt; und
optional die Dicke T2 der zweiten Beschichtungsschicht 3 nm≤T2≤6 nm erfüllt.

7. Herstellungsverfahren des ternären Kathodenmaterials nach einem der Ansprüche 1 bis 6, umfassend die folgenden Schritte:
Mischen eines Nickel-Kobalt-Mangan-Hydroxids, einer ersten Lithiumquelle und einer M1-Elementverbindung und Durchführen einer ersten Kalzinierungsbehandlung zum Herstellen einer Masse, die mit einem M1-Element gedopt wird;
Mischen der Masse, die mit dem M1-Element gedopt wird, einer zweiten Lithiumquelle, CeO₂ und einer Lanthanquelle und Durchführen einer zweiten Kalzinierungsbehandlung zum Herstellen eines Zwischenprodukt umfassend eine erste Beschichtungsschicht; und
Mischen des Zwischenprodukts umfassend die erste Beschichtungsschicht mit einer M2-Elementverbindung und Durchführen einer dritten Kalzinierungsbehandlung zum Herstellen des ternären Kathodenmaterials.

8. Herstellungsverfahren des ternären Kathodenmaterials nach Anspruch 7, wobei das Nickel-Kobalt-Mangan-Hydroxid die chemische Formel NiₓCo_{y}Mn_{z}(OH)₂ aufweist, wobei 0,6≤x≤0,8, 0,05≤y≤0,07, 0,13≤z≤0,35 und x+y+z=1.

9. Herstellungsverfahren des ternären Kathodenmaterials nach Anspruch 7 oder 8, das mindestens eines der folgenden Merkmale (1)~(5) erfüllt:
(1) die erste Lithiumquelle umfasst mindestens eines aus Lithiumhydroxid und Lithiumcarbonat;
(2) die M1-Elementverbindung umfasst eine Mo-Elementverbindung, eine Hf-Elementverbindung und eine La-Elementverbindung, wobei die Mo-Elementverbindung mindestens eine ist, die aus Molybdäntrioxid und Ammoniummolybdat ausgewählt wird, die Hf-Elementverbindung Hafniumoxid ist und die La-Elementverbindung mindestens eine ist, die aus Lanthantrioxid und Lanthannitrat ausgewählt wird.
(3) die zweite Lithiumquelle Lithiumhydroxid ist;
(4) die Lanthanquelle mindestens eines aus Lanthantrioxid und Lanthannitrat umfasst; und
(5) die M2-Elementverbindung mindestens eines aus einer B-Elementverbindung und einer Al-Elementverbindung umfasst, wobei die B-Elementverbindung mindestens eine aus Borsäure und Boroxid umfasst und die Al-Elementverbindung mindestens eine aus Aluminiumhydroxid und Aluminiumoxid umfasst.

10. Herstellungsverfahren des ternären Kathodenmaterials nach Anspruch 9, das mindestens eines der folgenden Merkmale (1)~(4) erfüllt:
(1) eine molare Menge des Lithiums in der ersten Lithiumquelle beträgt 102%~104% der Summe der molaren Mengen der Elemente Nickel, Kobalt und Mangan in dem Nickel-Kobalt-Mangan-Hydroxid;
(2) eine molare Menge des Mo-Elements in der Mo-Elementverbindung beträgt 0,001%~0,1% der Summe der molaren Mengen der Elemente Nickel, Kobalt und Mangan in dem Nickel-Kobalt-Mangan-Hydroxid;
(3) eine molare Menge des Hf-Elements in der Hf-Elementverbindung beträgt 0,001%~0,1% der Summe der molaren Mengen der Elemente Nickel, Kobalt und Mangan in dem Nickel-Kobalt-Mangan-Hydroxid; und
(4) eine molare Menge des La-Elements in der La-Elementverbindung beträgt 0,001%~0,1% der Summe der molaren Mengen der Elemente Nickel, Kobalt und Mangan in dem Nickel-Kobalt-Mangan-Hydroxid.

11. Herstellungsverfahren des ternären Kathodenmaterials nach Anspruch 9 oder 10, wobei eine Masse der Lanthanquelle 0,02%~0,08% einer Masse des Nickel-Kobalt-Mangan-Hydroxids beträgt, eine Masse des CeO₂ 0,04%~0,16% der Masse des Nickel-Kobalt-Mangan-Hydroxids beträgt und eine Masse der zweiten Lithiumquelle 0,02%~0,08% der Masse des Nickel-Kobalt-Mangan-Hydroxids beträgt.

12. Herstellungsverfahren des ternären Kathodenmaterials nach einem der Ansprüche 9 bis 11, wobei eine Masse der M2-Elementverbindung 0,08%~0,32% einer Masse des Zwischenprodukts umfassend die erste Beschichtungsschicht beträgt.

13. Herstellungsverfahren des ternären Kathodenmaterials nach einem der Ansprüche 7 bis 12, wobei die erste Kalzinierungsbehandlung bei einer Temperatur von 800 °C~1000 °C für 8 h~24 h in einer sauerstoffhaltigen Atmosphäre durchgeführt wird.

14. Herstellungsverfahren des ternären Kathodenmaterials nach einem der Ansprüche 7 bis 13, wobei nach der ersten Kalzinierungsbehandlung das kalzinierte Produkt auf 200 °C~300 °C mit einer Geschwindigkeit von 1 °C/min~2 °C/min abgekühlt wird und anschließend natürlich abgekühlt wird.

15. Sekundärbatterie, umfassend eine positive Elektrode, wobei die positive Elektrode das ternäre Kathodenmaterial nach einem der Ansprüche 1 bis 6 oder das ternäre Kathodenmaterial, das durch das Herstellungsverfahren nach einem der Ansprüche 7 bis 14 hergestellt wird, umfasst.

## Revendications

1. Un matériau de cathode ternaire, comprenant un volume, une première couche de revêtement disposée sur une surface du volume, et une seconde couche de revêtement disposée sur une surface de la première couche de revêtement, dans lequel
le volume comprend un oxyde de lithium-nickel-cobalt-manganèse, et le volume est dopé avec un élément M1, l'élément M1 comprenant Mo, Hf et La ;
la première couche de revêtement comprend CeO₂ et un composé contenant du La, et le CeO₂ et le composé contenant du La sont chacun indépendamment distribués sous forme granulaire sur la surface du volume ; et
la seconde couche de revêtement comprend un oxyde contenant un élément M2, et l'élément M2 est au moins un élément choisi parmi B et Al.

2. Le matériau de cathode ternaire selon la revendication 1, dans lequel l'oxyde de lithium-nickel-cobalt-manganèse a une formule chimique Li₁₊ₐNiₓCo_{y}Mn_{z}O₂, où 0,02≤a≤0,04, 0,6≤x≤0,8, 0,05≤y≤0,07, 0,13≤z≤0,35 et x+y+z=1.

3. Le matériau de cathode ternaire selon la revendication 1 ou 2, satisfaisant au moins une des caractéristiques (1)~(6) suivantes :
(1) une quantité molaire de l'élément Mo est de 0,001%~0,1% d'une somme des quantités molaires des éléments nickel, cobalt et manganèse dans l'oxyde de lithium-nickel-cobalt-manganèse ;
(2) une quantité molaire de l'élément Hf est de 0,001%~0,1% d'une somme des quantités molaires des éléments nickel, cobalt et manganèse dans l'oxyde de lithium-nickel-cobalt-manganèse ;
(3) une quantité molaire de l'élément La est de 0,001%~0,1% d'une somme des quantités molaires des éléments nickel, cobalt et manganèse dans l'oxyde de lithium-nickel-cobalt-manganèse ;
(4) l'élément M1 comprend en outre au moins un de W, Nb, Zr et Al ;
(5) le composé contenant du La est La₄NiLiO₈ ; et
(6) l'oxyde contenant l'élément M2 est au moins un de B₂O₃ et Al₂O₃.

4. Le matériau de cathode ternaire selon l'une quelconque des revendications 1 à 3, dans lequel un rapport de teneur du CeO₂ au composé contenant du La est 1:1~3:1, dans lequel
les teneurs du CeO₂ et du composé contenant du La sont toutes deux des teneurs en pourcentage massique dans le matériau de cathode ternaire.

5. Le matériau de cathode ternaire selon l'une quelconque des revendications 1 à 4, dans lequel une teneur en pourcentage massique du CeO₂ dans le matériau de cathode ternaire est 0,04%~0,16% ; et une teneur en pourcentage massique du composé contenant du La dans le matériau de cathode ternaire est 0,03%~0,1%.

6. Le matériau de cathode ternaire selon l'une quelconque des revendications 1 à 5, dans lequel une épaisseur T1 de la première couche de revêtement et un diamètre moyen de particules D du matériau de cathode ternaire satisfont : 0,0015≤T1/D≤0,006;
et/ou, une épaisseur T2 de la seconde couche de revêtement et le diamètre moyen de particules D du matériau de cathode ternaire satisfont : 0,001≤T2/D≤0,0035;
optionnellement, le diamètre moyen de particules D du matériau de cathode ternaire satisfait : 1.9 µm ≤D≤2.3 µm;
optionnellement, l'épaisseur T1 de la première couche de revêtement satisfait : 4 nm≤T1≤10 nm; et
optionnellement, l'épaisseur T2 de la seconde couche de revêtement satisfait : 3 nm≤T2≤6 nm.

7. Un procédé de préparation du matériau de cathode ternaire selon l'une quelconque des revendications 1 à 6, comprenant les étapes suivantes :
mélanger un hydroxyde de nickel-cobalt-manganèse, une première source de lithium et un composé d'élément M1, et effectuer un premier traitement de calcination, pour préparer un volume dopé avec un élément M1 ;
mélanger le volume dopé avec l'élément M1, une seconde source de lithium, CeO₂ et une source de lanthane, et effectuer un second traitement de calcination, pour préparer un intermédiaire comprenant une première couche de revêtement ; et
mélanger l'intermédiaire comprenant la première couche de revêtement avec un composé d'élément M2, et effectuer un troisième traitement de calcination, pour préparer le matériau de cathode ternaire.

8. Le procédé de préparation du matériau de cathode ternaire selon la revendication 7, dans lequel l'hydroxyde de nickel-cobalt-manganèse a une formule chimique NiₓCo_{y}Mn_{z}(OH)₂, où 0,6≤x≤0,8, 0,05≤y≤0,07, 0,13≤z≤0.35, et x+y+z=1.

9. Le procédé de préparation du matériau de cathode ternaire selon la revendication 7 ou 8, satisfaisant au moins une des caractéristiques (1)~(5) suivantes :
(1) la première source de lithium comprend au moins un de l'hydroxyde de lithium et du carbonate de lithium ;
(2) le composé d'élément M1 comprend un composé d'élément Mo, un composé d'élément Hf et un composé d'élément La, dans lequel le composé d'élément Mo est au moins un choisi parmi le trioxyde de molybdène et le molybdate d'ammonium, le composé d'élément Hf est l'oxyde d'hafnium, et le composé d'élément La est au moins un choisi parmi le trioxyde de lanthane et le nitrate de lanthane ;
(3) la seconde source de lithium est l'hydroxyde de lithium ;
(4) la source de lanthane comprend au moins un de le trioxyde de lanthane et le nitrate de lanthane ; et
(5) le composé d'élément M2 comprend au moins l'un parmi un composé d'élément B et un composé d'élément A1, dans lequel le composé d'élément B comprend au moins l'un parmi l'acide borique et l'oxyde de bore, et le composé d'élément Al comprend au moins l'un parmi l'hydroxyde d'aluminium et l'oxyde d'aluminium.

10. Le procédé de préparation du matériau de cathode ternaire selon la revendication 9, satisfaisant au moins une des caractéristiques (1)~(4) suivantes :
(1) une quantité molaire d'élément lithium dans la première source de lithium est 102%~104% d'une somme des quantités molaires des éléments nickel, cobalt et manganèse dans l'hydroxyde de nickel-cobalt-manganèse ;
(2) une quantité molaire d'élément Mo dans le composé d'élément Mo est 0,001%~0,1% d'une somme des quantités molaires des éléments nickel, cobalt et manganèse dans l'hydroxyde de nickel-cobalt-manganèse ;
(3) une quantité molaire d'élément Hf dans le composé d'élément Hf est 0,001%~0,1% d'une somme des quantités molaires des éléments nickel, cobalt et manganèse dans l'hydroxyde de nickel-cobalt-manganèse ; et
(4) une quantité molaire d'élément La dans le composé d'élément La est 0,001%~0,1% d'une somme des quantités molaires des éléments nickel, cobalt et manganèse dans l'hydroxyde de nickel-cobalt-manganèse.

11. Le procédé de préparation du matériau de cathode ternaire selon la revendication 9 ou 10, dans lequel une masse de la source de lanthane est 0,02%~0,08% d'une masse de l'hydroxyde de nickel-cobalt-manganèse, une masse du CeO₂ est 0,04%~0,16% de la masse de l'hydroxyde de nickel-cobalt-manganèse, et une masse de la seconde source de lithium est 0,02%~0,08% de la masse de l'hydroxyde de nickel-cobalt-manganèse.

12. Le procédé de préparation du matériau de cathode ternaire selon l'une quelconque des revendications 9 à 11, dans lequel une masse du composé d'élément M2 est 0,08%~0,32% d'une masse de l'intermédiaire comprenant la première couche de revêtement.

13. Le procédé de préparation du matériau de cathode ternaire selon l'une quelconque des revendications 7 à 12, dans lequel le premier traitement de calcination est effectué à une température de 800°C~1000°C pendant 8 h~24 h, dans une atmosphère contenant de l'oxygène.

14. Le procédé de préparation du matériau de cathode ternaire selon l'une quelconque des revendications 7 à 13, dans lequel après le premier traitement de calcination, le produit calciné est refroidi à 200°C~300 °C à un taux de 1°C/min~2°C/min, puis refroidi naturellement.

15. Une batterie secondaire, comprenant une électrode positive, dans laquelle l'électrode positive comprend le matériau de cathode ternaire selon l'une quelconque des revendications 1 à 6 ou le matériau de cathode ternaire préparé par le procédé de préparation selon l'une quelconque des revendications 7 à 14.
